# EUROPEAN PATENT SPECIFICATION

(11) **EP 3 878 339 B1**
(45) Date of publication and mention of the grant of the patent: **28.06.2023**
(21) Application number: 21161986.1
(22) Date of filing: 11.03.2021
(51) Int. Cl.: A47L 11/40

(54) **WHEEL ASSEMBLY STRUCTURE FOR PREVENTING WHEEL SLIP AND MOBILE ROBOT USING THE SAME**
RADANORDNUNGSSTRUKTUR ZUR VERHINDERUNG VON RADSCHLUPF UND MOBILER ROBOTER MIT VERWENDUNG DAVON
STRUCTURE DE MONTAGE DE ROUE POUR EMPÊCHER LE GLISSEMENT DE ROUE ET ROBOT MOBILE L'UTILISANT

(30) Priority: 13.03.2020 KR 20200031557
(43) Date of publication of application: 15.09.2021
(73) Proprietor: Miele & Cie. KG, 33332 Gütersloh (DE); Yujin Robot Co., Ltd., Incheon, 22013 (KR)
(72) Inventor: Mun, Chang Oh, Incheon 22013 (KR); Park, Seong Ju, 22013 Incheon (KR)
(74) Representative: Ellerbrächter, Dirk

(56) References cited:
- EP-A1- 3 342 322
- CN-A- 105 640 445
- US-A1- 2020 039 307

## Description

### CROSS-REFERENCE TO RELATED APPLICATIONS

This application claims priority to and the benefit of Korean Patent Application No. 10-2020-0031557 filed in the Korean Intellectual Property Office on March 13, 2020.

### TECHNICAL FIELD

The present disclosure relates to a wheel assembly which applies a hinge structure to prevent wheel slip and a mobile robot using the same.

### BACKGROUND ART

The contents described in this section merely provide background information on the exemplary embodiment of the present disclosure, but do not constitute the related art.

A mobile robot is a robot which performs a specific task while traveling by itself or traveling under external control and includes a cleaning robot and a surveillance robot depending on the type of tasks to be performed. Such a mobile robot generally has a function of performing ordered tasks, such as cleaning or surveillance, by itself.

For example, a mobile robot for cleaning sucks dusts or foreign materials while moving a predetermined cleaning zone such as home or offices by itself. To this end, the mobile robot is configured by a wheel assembly which moves the mobile robot, a plurality of sensing sensors which senses obstacles to allow the mobile robot to move without colliding with various obstacles in the cleaning zone, a battery which supplies power, and a microprocessor which controls the overall device, as well as configurations of a general vacuum cleaner which sucks dust or foreign materials.

The wheel assembly which allows the mobile robot to travel includes a wheel and a motive power source such as a driving motor which supplies a driving force to the wheel. The wheel rotates by the driving force supplied from the motive power source to allow the mobile robot to travel. However, generally, the wheel is configured to rotate while being fixed to a robot body of the mobile robot. However, the mobile robot may travel not only on a flat traveling surface, but also on an uneven traveling surface such as bumpy traveling surface or pass through an obstacle such as a door sill, or travel on a slippery traveling surface.
EP 3 342 322 A1 discloses a mobile robot with a wheel assembly comprising a wheel gear box which includes a main wheel, a driving motor and a gear which rotate the main wheel and generates a hinge torque to a first hinge axis equipped at one side by the rotation of the main wheel to be rotatable within a predetermined range.US 2020 / 039307 A1 and CN 105 640 445 A1 disclose wheel assemblies for mobile robots.

There is a problem in that when a grip force of the wheel of the mobile robot is smaller than a traveling resistance or the traveling resistance is larger than a grip force, wheel slip may be caused. Further, when the mobile robot travels on the bumpy traveling surface, if the traveling surface is uneven so that only one wheel is gripped onto the traveling surface, but the other wheel is located in a concavely dented portion not to be gripped on the traveling surface, the mobile robot may continuously rotate in the same position with the wheel which is not gripped onto the traveling surface as an axis. That is, there may be a problem in that the mobile robot continuously spins without moving forward.

Further, when the mobile robot travels in an environment (for example, on the carpet) in which the resistance for the traveling is severe, the mobile robot may not normally travel due to the slip phenomenon of the wheel. That is, when the mobile robot travels in an environment having a high traveling resistance, the moving speeds and moving distances at the time of the moving forward and moving backward may be different or the slip phenomenon of the wheel may occur. In this case, it is difficult to control the traveling of the mobile robot and problems such as the risk of safety accidents and irregularity of the cleaning performance may be caused.

### SUMMARY

A main object of the present disclosure is to provide a wheel assembly structure which applies at least one hinge unit to a wheel assembly structure which drives a main wheel to prevent wheel slip which increases a normal force and a grip force and a mobile robot using the same.

According to an aspect of the present disclosure, in order to achieve the above-mentioned object, a wheel assembly of a mobile robot includes a wheel gear box assembly which includes a main wheel to move a mobile robot, a driving motor and a gear which rotate the main wheel and generates a hinge torque to a first hinge axis equipped at one side by the rotation of the main wheel to be rotatable within a predetermined range; a hinge shaft which has one side end coupled to the first hinge axis of the wheel gear box assembly and rotates the wheel gear box assembly by means of a second hinge axis equipped at the other side end; and a wheel upper cover which is coupled to the wheel gear box assembly to protect an upper portion and includes a second hinge axis mounting unit formed at the other side end to be coupled to the second hinge axis.

According to another aspect of the present disclosure, In order to achieve the above-described objects, a mobile robot includes a main body housing which defines an outer circumference surface of the mobile robot, a wheel assembly which includes a wheel gear box assembly which includes a main wheel to move a mobile robot, a driving motor and a gear which rotate the main wheel and generates a hinge torque to a first hinge axis equipped at one side by the rotation of the main wheel to be rotatable within a predetermined range; a hinge shaft which has one side end coupled to the first hinge axis of the wheel gear box assembly and rotates the wheel gear box assembly by means of a second hinge axis equipped at the other side end, and a wheel upper cover which is coupled to the wheel gear box assembly to protect an upper portion and includes a second hinge axis mounting unit formed at the other side end to be coupled to the second hinge axis, and is coupled to the main body housing; a rotating assembly which includes a rotary rollerwhich rotates toward a floor to be cleaned and is provided to be independently detachable and a rotation member formed on a surface of the rotary roller and removes foreign materials on the floor by means of the rotation of the rotary roller; and a control circuit which controls the operations of the wheel assembly and the rotating assembly.

As described above, according to the present disclosure, when the mobile robot travels in an environment (for example, on the carpet) in which a resistance for robot traveling is severe, the wheel slip phenomenon may be prevented. Further, according to the present disclosure, the grip force is improved to increase the traveling performances of moving forward and backward to the same level.

Further, according to the present disclosure, at least one hinge unit is applied to the wheel assembly to enable stable traveling even in an environment in which the traveling resistance is severe.

### BRIEF DESCRIPTION OF DRAWINGS

FIG. 1 is a cross-sectional view of a structure of a wheel assembly according to an exemplary embodiment of the present disclosure;
FIG. 2 is a cross-sectional view of a mobile robot for explaining a position of a first hinge unit between an auxiliary wheel and a wheel assembly according to an exemplary embodiment of the present disclosure;
FIGS. 3A and 3B are views for explaining an operating method of a wheel assembly for preventing wheel slip according to an exemplary embodiment of the present disclosure;
FIG. 4 is a cross-sectional view for explaining a wheel assembly including a plurality of hinge units and a mobile robot according to an exemplary embodiment of the present disclosure;
FIG. 5 is an exemplary view illustrating an operation of a plurality of hinge units during the movement in a wheel assembly according to an exemplary embodiment of the present disclosure;
FIGS. 6A and 6B are exploded views illustrating an assembling structure of a wheel assembly including a plurality of hinge units according to an exemplary embodiment of the present disclosure;
FIG. 7 is an exploded view illustrating an assembling structure of a wheel gear box assembly of a wheel assembly according to an exemplary embodiment of the present disclosure;
FIG. 8 is a view illustrating a connecting structure of an elastic member of a wheel assembly according to an exemplary embodiment of the present disclosure;
FIG. 9 is a view illustrating a structure of a wheel upper cover for adjusting a rotation angle of a plurality of hinge units according to an exemplary embodiment of the present disclosure;
FIG. 10 is an exploded view illustrating a wheel assembly with a multiple hinge structure including a plurality of hinge shafts according to an exemplary embodiment of the present disclosure;
FIGS. 11A and 11B are views illustrating a mobile robot to which a wheel assembly for preventing wheel slip according to an exemplary embodiment of the present disclosure is applied; and
FIG. 12 is a view illustrating a connecting structure of an elastic member of a wheel assembly according to another exemplary embodiment of the present disclosure.

### BEST MODE FOR CARRYING OUT THE INVENTION

Hereinafter, exemplary embodiments of the present disclosure will be described in detail with reference to the accompanying drawings. In the description of the present disclosure, if it is considered that the specific description of related known configuration or function may cloud the gist of the present disclosure, the detailed description will be omitted. Further, hereinafter, exemplary embodiments of the present disclosure will be described. However, it should be understood that the technical spirit of the present disclosure is not restricted or limited to the specific embodiments, but may be changed or modified in various ways by those skilled in the art to be carried out. Hereinafter, a wheel assembly structure for preventing wheel slip proposed by the present disclosure and a mobile robot using the same will be described in detail with reference to the drawings.

The wheel assembly of the mobile robot according to the present disclosure may be installed in various mobile robots which perform a specific task while traveling upon the self-control or the external control, to be operated. In the following description, it is assumed that the wheel assembly of the mobile robot according to the present disclosure is installed in a cleaning mobile robot.

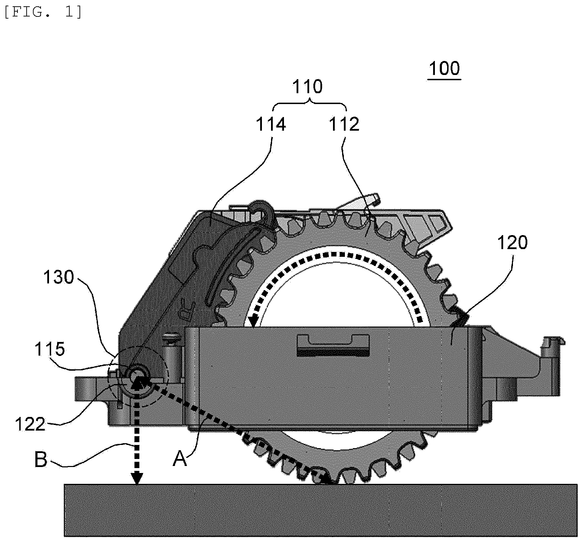

FIG. 1 is a cross-sectional view of a structure of a wheel assembly according to an exemplary embodiment of the present disclosure.

The wheel assembly 100 according to the present disclosure includes a wheel gear box assembly 110 and a wheel lower cover 120. The wheel assembly 100 of FIG. 1 is an example so that all blocks illustrated in FIG. 1 are not essential components and in another exemplary embodiment, some blocks included in the wheel assembly 100 may be added, modified, or omitted. The wheel assembly 100 is mounted in a main body of the mobile robot 10 to perform an operation to control the traveling to move the mobile robot 10.

The wheel gear box assembly 110 includes a main wheel 112 which moves the mobile robot 10, and a gear box 114 and a driving motor 116 which rotate the main wheel 112. Further, the wheel gear box assembly 110 includes a first hinge axis 115 and generates a hinge toque to the first hinge axis 115 equipped at one side by the rotation of the main wheel 112 to be rotatable within a predetermined range.

The main wheel 112 refers to a wheel which rotates to travel the mobile robot 10. When the wheel assembly 100 is mounted on the main body of the mobile robot 10, the main wheel 112 is gripped on the traveling surface (ground) of the mobile robot 10 and is driven by the driving motor 116 to travel the mobile robot 10.

The main wheel 112 is coupled to a rotary axis of a driven gear included in the gear box 114 to rotate as one unit with the driven gear.

The main wheel 112 is fixed to the gear box 114 to rotate together with the gear box 114 by the rotation of the first hinge axis 115 equipped in the gear box 114. The grip force of the main wheel 112 with the ground may be increased by the rotation of the first hinge axis 115.

The gear box 114 may include a driving gear which is driven by the driving motor 116 and a driven gear which is driven by the driving gear.

The driving gear of the gear box 114 is coupled to a rotary axis of the driving motor 116 to be driven by the driving motor 170 -> 116 and the main wheel 112 is coupled to a rotary axis of the driven gear. A transmission gear (not illustrated) which transmits a driving force of the driving gear to the driven gear may be further provided between the driving gear and the driven gear. A reduction gear having the configuration as described above transmits the driving force of the driving motor 116 to the main wheel 112.

The gear box 114 includes a first hinge axis 115 formed to be parallel to the rotary axis of the driven gear at one side end. The first hinge axis 115 of the gear box 114 is coupled to a first hinge axis mounting unit 122 equipped in the wheel lower cover 120 to form the first hinge unit 130 which improves the grip force of the main wheel 112.

The driving motor 116 is coupled to the gear box 114 to perform an operation of generating a driving force to rotate the main wheel 112. Even though in the present exemplary embodiment, it is illustrated that the driving motor 116 which supplies a driving force for driving the main wheel 112 is accommodated in the wheel lower cover 120 and the wheel upper cover 140 to be modulated together with the wheel assembly 100 for modulation of the wheel assembly 100, the exemplary embodiment is not necessarily limited thereto. For example, the driving motor 116 is not an essential component of the wheel assembly 100 according to the present disclosure. As long as the driving gear is coupled to the driving axis of the driving motor 116, an installation position of the driving motor 116 and a coupling structure with the wheel assembly 100 may vary in various forms.

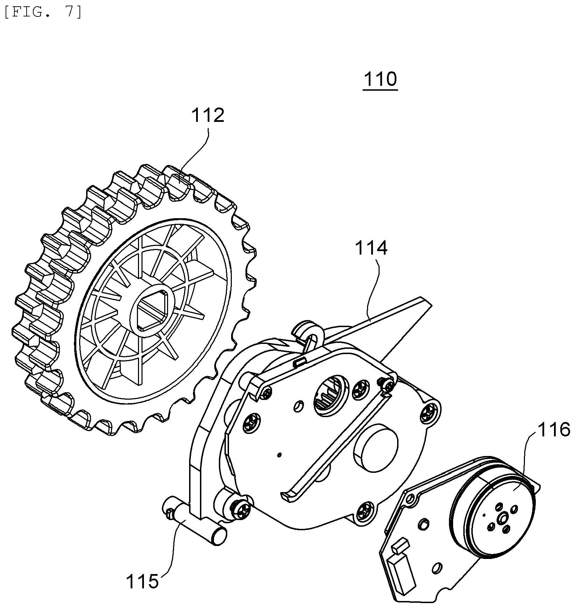

A coupling structure between components included in the wheel gear box assembly 110 will be described with reference to FIG. 7.

The wheel lower cover 120 is coupled to the wheel gear box assembly 110 to protect the lower portion. The wheel lower cover 120 is coupled to the wheel upper cover 140 to form a predetermined accommodation space, but is not necessarily limited thereto. Therefore, when the upper portion is open, the wheel upper cover 140 may be omitted.

The wheel lower cover 120 includes a first hinge axis mounting unit 122 which is coupled to the first hinge axis 115, at one side end. The first hinge axis mounting unit 122 is coupled to the first hinge axis 115 so as to rotate the first hinge axis 115 while fixing the first hinge axis 115.

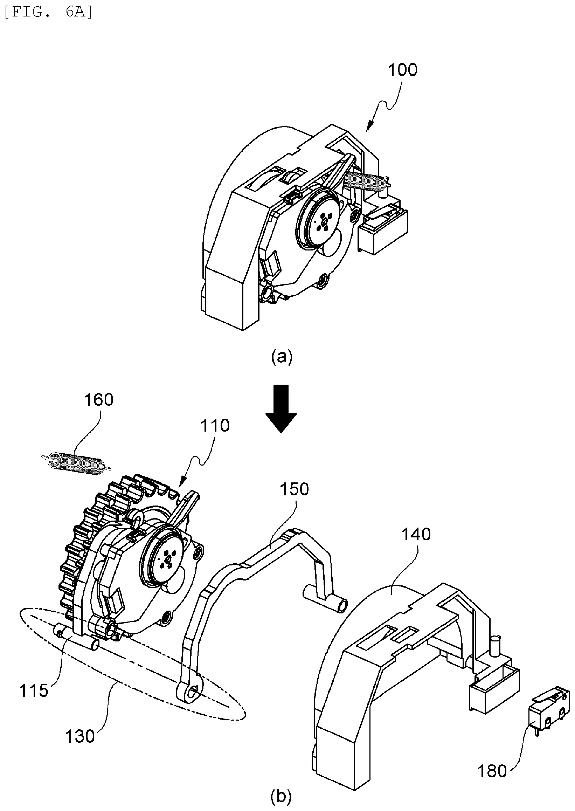

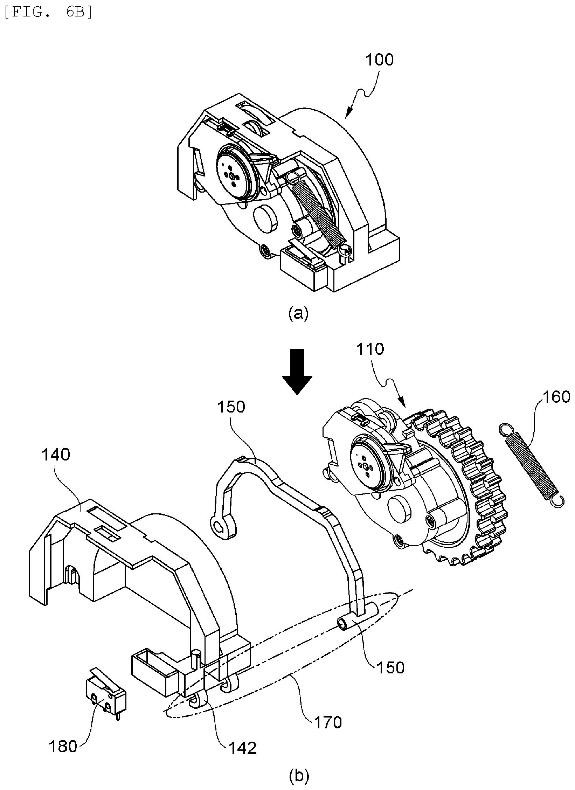

The first hinge unit 130 includes the first hinge axis 115 and the first hinge axis mounting unit 122. In the meantime, when the wheel lower cover 120 is omitted, as illustrated in FIGS. 6A and 6B, the first hinge unit 130 may include a part of the hinge shaft 150 which is coupled to the wheel upper cover 140. That is, the first hinge unit 130 may have a structure in which the hinge shaft 115 is coupled to a hinge coupling hole at one side end of the hinge shaft 150.

When the main wheel 112 rotates in one direction, in the first hinge unit 130, a hinge torque is generated in a direction opposite to one rotation direction and a normal force is generated by the hinge torque.

The first hinge unit 130 is installed in a position with a predetermined distance from a center of the rotary axis of the main wheel 112 and installed at a height between the center of the rotary axis of the main wheel 112 and the ground.

When the main wheel 112 rotates in one rotation direction, the grip force between the main wheel 112 and the ground is increased and the grip force between the main wheel 112 and the ground is increased by a normal force increased while a hinge torque is generated in the first hinge axis 115 in a direction opposite to the one rotation direction.

The wheel assembly 100 rotates together with the main wheel 112 and may further include an auxiliary wheel 200 installed in a position with a distance from the main wheel 112 in the main body of the mobile robot 10.

The first hinge unit 130 is installed between an imaginary reference line C connecting the center of the auxiliary wheel 200 and the center of the main wheel 130 and the ground. In the first hinge unit 130, a first distance D1 between the center of the auxiliary wheel 200 and the center of the first hinge axis 115 may be formed to be longer than a second distance D2 between the center of the main wheel 112 and the center of the first hinge axis 115. The first hinge unit 30 is installed in a position in which the sum of the first distance D1 and the second distance D2 is longer than the length of the imaginary reference line C.

Referring to FIG. 1, in the wheel assembly 100 according to the exemplary embodiment, the first hinge unit 130 is installed in a position in which a distance A is formed to be longer than a distance B. Here, the distance A refers to a distance between the center of the first hinge axis 115 and a thread surface on which the main wheel 112 and the ground are in contact with each other and the distance B refers to a distance between the center of the first hinge axis 115 and the ground.

Further, when a driving force is equal to or higher than a reference for rotating the main wheel 112, in the first hinge unit 130, a hinge torque is generated to improve the grip force of the main wheel 112.

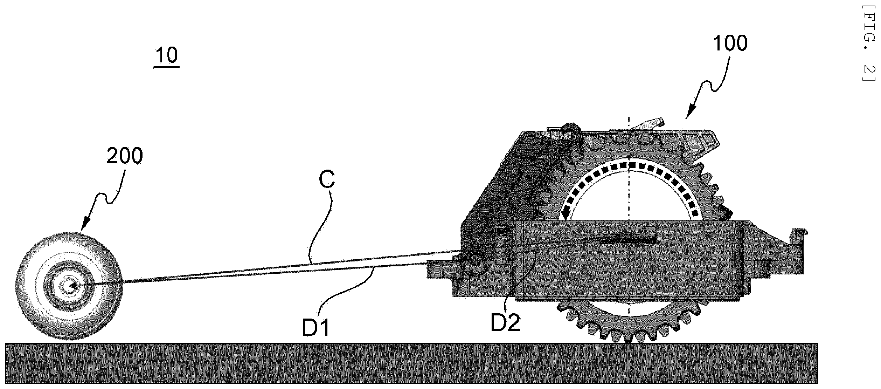

FIG. 2 is a cross-sectional view of a mobile robot for explaining a position of a first hinge unit between an auxiliary wheel and a wheel assembly according to an exemplary embodiment of the present disclosure.

In the wheel assembly 100 according to the present disclosure, when the main wheel 112 rotates in one direction, the first hinge unit 130 is installed to be rotatable in a state in which the first rotary axis 115 is fixed. That is, in the wheel assembly 100, the first rotary axis 115 maybe implemented only to be rotatable but the height thereof is not adjusted.

The wheel assembly 100 rotates together with the main wheel 112 and may further include an auxiliary wheel 200 installed in a position with a distance from the main wheel in the main body of the mobile robot 10.

The first hinge unit 130 may be installed only to be rotatable in an environment in which the driving resistance of the main wheel 112 and the auxiliary wheel 200 is high. Specifically, the first hinge unit 130 cannot move to a direction in which the auxiliary wheel 200 is equipped due to the driving resistance.

Further, a torque is generated in an opposite direction to the rotation direction of the main wheel 112 so that the first hinge unit 130 cannot move in a direction opposite to the direction in which the auxiliary wheel 200 is equipped. Further, the first hinge unit 130 is blocked by the ground on the flat ground so that the first hinge unit 130 cannot move downwardly.

Further, the first hinge unit 130 cannot move to the upward direction opposite to the ground.

The first hinge unit 130 is installed between an imaginary reference line C connecting the center of the auxiliary wheel 200 and the center of the main wheel 130 and the ground. In the first hinge unit 130, a first distance D1 between the center of the auxiliary wheel 200 and the center of the first hinge axis 115 may be formed to be longer than a second distance D2 between the center of the main wheel 112 and the center of the first hinge axis 115. The first hinge unit 130 is installed in a position in which the sum of the first distance D1 and the second distance D2 is longer than the length of the imaginary reference line C.

In the exemplary embodiment, the sum of the first distance D1 and the second distance D2 has a fixed length value and the imaginary reference line C has a value small than the sum of the first distance D1 and the second distance D2.

In order to upwardly move the first hinge unit 130, the center of the first hinge axis 115 needs to pass a moment when the length of the imaginary reference line C is equal to the sum of the first distance D1 and the second distance D2. However, to this end, the imaginary reference line C needs to be increased and only way to increase the imaginary reference line C is to rotate the main wheel 112 in the other direction. However, the other direction is opposite to the rotation direction (one direction) of the main wheel 112 so that this way cannot be achieved.

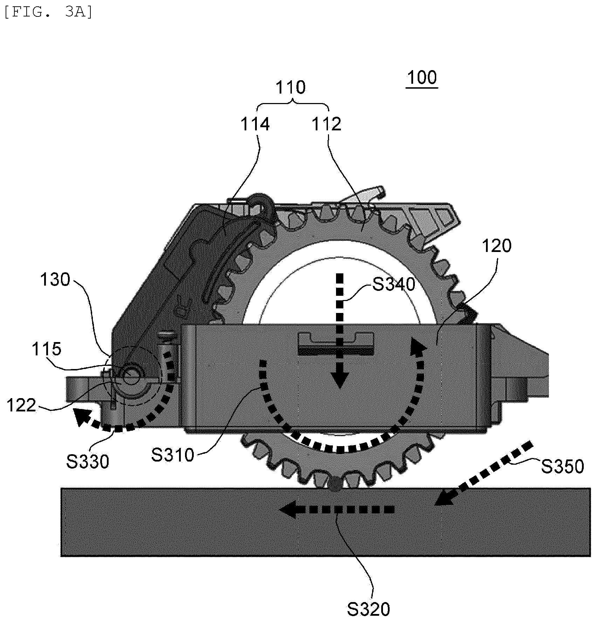

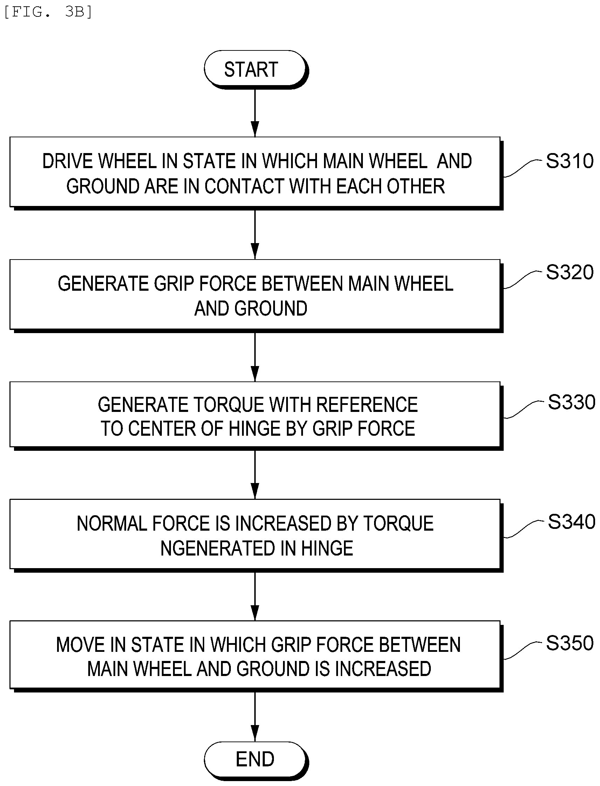

Accordingly, the imaginary reference line C cannot be increased and the length of the imaginary reference line C cannot be equal to the sum of the first direction D1 and the second distance D2 so that the first hinge unit 130 cannot be move to an upward direction which is opposite to the ground. FIGS. 3A and 3B are views for explaining an operating method of a wheel assembly for preventing wheel slip according to an exemplary embodiment of the present disclosure.

FIG. 3A is a view for explaining an operation of increasing a grip force based on a structure of a wheel assembly for preventing wheel slip and FIG. 3B is a flowchart illustrating an operation of a wheel assembly for preventing wheel slip. Referring to FIGS. 3A and 3B, the wheel assembly 100 rotates the main wheel 112 in one direction by means of the driving motor and the gear in a state in which the main wheel 112 and the ground are in contact with each other (S310) to generate a grip force between the main wheel 112 and the ground (S320). Here, the grip force generated between the main wheel 112 and the ground refers to a horizontal force like a grip force (a frictional force) between the main wheel 112 and the ground.

The wheel assembly 100 generates a hinge torque with respect to the center of the first hinge axis 115 of the first hinge unit 130 by the grip force generated between the main wheel 112 and the ground. Here, the hinge torque refers to a vertical force formed by the grip force and the vertical force refers to a force generated by the horizontal force of step S320.

In the wheel assembly 100, the normal force is increased by the hinge torque generated in the first hinge unit 130 (S340) . Here, the normal force refers to a force formed in the main wheel 112 by the vertical force in step S330.

The wheel assembly 100 allows the mobile robot 10 to travel in a state in which the grip force (frictional force) between the main wheel 112 and the ground is increased by the increased normal force (S350).

Specifically, in the wheel assembly 100, the grip force is increased by the increased normal force and the grip force and the normal force are increased with each other until the magnitude of the grip force is equal to or larger than the traveling resistance. Here, when the grip force between the main wheel 112 and the ground is equal to or larger than the traveling resistance, the wheel assembly 100 moves without causing wheel slip.

Even though in FIGS. 3A and 3B, it is described that the steps are sequentially executed, the present disclosure is not necessarily limited thereto. In other words, the steps described in FIGS. 3A and 3B may be modified to be executed or one or more steps may be executed in parallel so that FIGS. 3A and 3B are not limited to a time-sequential order.

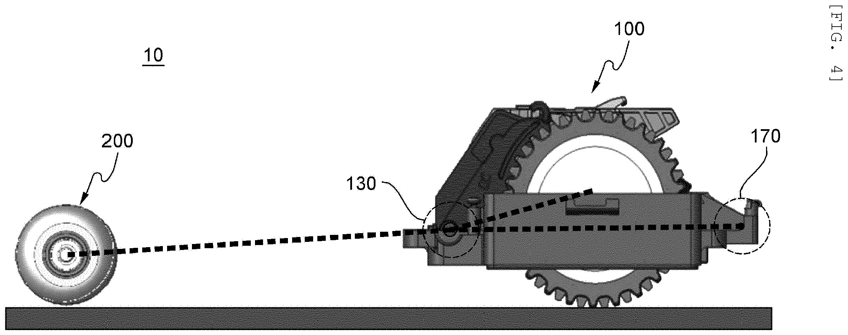

FIG. 4 is a cross-sectional view for explaining a wheel assembly including a plurality of hinge units and a mobile robot according to an exemplary embodiment of the present disclosure .

The first hinge unit 130 and the second hinge unit 170 are installed in positions with the same height.

The first hinge unit 130 includes the first hinge axis 115 and the first hinge axis mounting unit 122. When the main wheel 112 rotates in one direction, in the first hinge unit 130, a hinge torque is generated in a direction opposite to the one rotation direction and the normal force is generated by the hinge torque.

The first hinge unit 130 is installed in a position with a predetermined distance from a center of the rotary axis of the main wheel 112 and installed at a height between the center of the rotary axis of the main wheel 112 and the ground.

When the main wheel 112 rotates in one rotation direction, the grip force between the main wheel 112 and the ground is increased and in the first hinge unit 130, the grip force between the main wheel 112 and the ground is increased by a normal force increased while a hinge torque is generated to the first hinge axis 115 in a direction opposite to the one rotation direction.

The second hinge unit 170 includes a second hinge axis 152 and a second hinge axis mounting unit 142. When the main wheel 112 rotates in the other direction, in the second hinge unit 170, a hinge torque is generated in a direction opposite to the other rotation direction and the normal force is generated by the hinge torque.

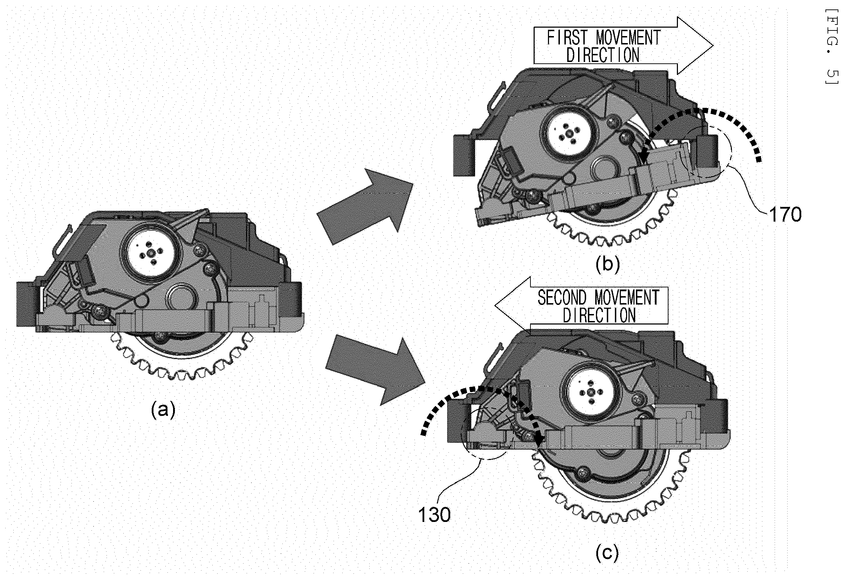

FIG. 5 is an exemplary view illustrating an operation of a plurality of hinge units during the movement in a wheel assembly according to an exemplary embodiment of the present disclosure.

FIG. 5(a) illustrates a wheel assembly 100 in a state in which the mobile robot 10 is stopped.

As illustrated in FIG. 5(b), when the main wheel 112 rotates to move the mobile robot 10 in a first movement direction, in the second hinge unit 170, a hinge torque is generated in a direction opposite to the rotation direction of the main wheel 112 and thus the grip force when the mobile robot 10 travels in the first movement direction may be increased.

As illustrated in FIG. 5(c), when the main wheel 112 rotates to move the mobile robot 10 in a second movement direction, in the first hinge unit 130, a hinge torque is generated in a direction opposite to the rotation direction of the main wheel 112 and thus the grip force when the mobile robot 10 travels in the second movement direction may be increased. FIGS. 6A and 6B are exploded views illustrating an assembling structure of a wheel assembly including a plurality of hinge units according to an exemplary embodiment of the present disclosure.

Awheel assembly 100 according to an exemplary embodiment includes a wheel gear box assembly 110, a wheel lower cover 120, a wheel upper cover 140, a hinge shaft 150, and a sensor 180.

The description of the wheel gear box assembly 110 and the wheel lower cover 120 of the wheel assembly 100 overlaps the description of FIG. 1 so that a detailed description thereof will be omitted. Further, the wheel lower cover 120 is a component which is coupled to a lower surface of the wheel upper cover 140 of FIG. 6 and for the purpose of description of an internal configuration and a coupling structure of the wheel assembly 100, the illustration of the wheel lower cover 120 will be omitted in FIG. 6.

The wheel upper cover 140 is coupled to the wheel gear box assembly 110 to protect the upper portion. The wheel upper cover 140 is coupled to the wheel lower cover 120 to form a predetermined accommodation space.

The wheel upper cover 140 includes a second hinge axis mounting unit 152 which is coupled to the second hinge axis 152, at the other side end. The second hinge axis mounting unit 142 is coupled to the second hinge axis 152 so as to rotate the second hinge axis 152 while fixing the second hinge axis 152.

The hinge shaft 150 has a structure which supports the first hinge unit 130 and the second hinge unit 170 and adjusts a rotation radius. The hinge shaft 150 may be implemented to support an inner surface of the wheel upper cover 140.

One side end of the hinge shaft 150 is coupled to the first hinge axis 115 of the wheel gear box assembly 110 and the second hinge axis 152 is equipped at the other side end. The wheel gear box assembly 110 may rotate by means of the second hinge axis 152 equipped at the other side end of the hinge shaft 150.

The hinge shaft 150 includes a hinge coupling hole at one side end and a second hinge axis 152 parallel to the first hinge axis at the other side end. The hinge coupling hole of the hinge shaft 150 is coupled to one side end of the first hinge axis 115 formed in the gear box 114.

The second hinge axis 152 of the hinge shaft 150 is installed in a position with a height different from the first hinge axis 115 with respect to the ground. Specifically, the second hinge axis 152 is installed such that the center of the second hinge axis 152 is located to be lower than the center of the first hinge axis 115 with respect to the ground. For example, the second hinge axis 152 may be formed in a position where the height of the second hinge axis 152 is lower than the height between the ground and the first hinge axis 115 by 1 mm or more.

The second hinge unit 170 includes the second hinge axis 152 and the second hinge axis mounting unit 142.

When the main wheel 112 rotates in the other direction, in the second hinge unit 170, a hinge torque is generated in a direction opposite to the other rotation direction and the normal force is generated by the hinge torque.

FIG. 6A (a) illustrates a wheel assembly 100 and FIG. 6A (b) illustrates an exploded view of the wheel assembly 100. Referring to FIG. 6A(b), the first hinge axis 115 formed in the gear box 114 is coupled to the hinge coupling hole equipped at one side end of the hinge shaft 150 and is coupled to the first hinge axis mounting unit 122 in the coupled state. In the meantime, when the configuration of the wheel lower cover 120 is omitted, the first hinge axis 115 is not coupled to the first hinge axis mounting unit 122, but may be coupled only to the hinge coupling hole.

FIG. 6B (a) illustrates a wheel assembly 100 and FIG. 6B (b) illustrates an exploded view of the wheel assembly 100. Referring to FIG. 6B(b), the second hinge axis 152 formed at the other end of the hinge shaft 150 may be coupled to the second hinge axis mounting unit 142 equipped in the wheel upper cover 140.

The sensor 180 senses a state in which the main wheel 112 rotates with respect to the main body of the mobile robot 10 to be lowered. The sensor 180 may sense the state of the wheel gear box assembly 110 which is lowered as the second hinge axis 152 rotates by the hinge torque generated in the second hinge unit 170.

When the sensor 180 senses that the lowered state of the wheel gear box assembly 110 is out of a predetermined range, a controller determines that the mobile robot cannot be operated and shuts down the power supplied to the driving motor 116 to stop the operation of the driving motor 116. Such an inoperable state of the mobile robot may be a state in which a user lifts and holds the mobile robot or a state in which the mobile is stuck in a high threshold over which the mobile robot cannot pass. The sensor 180 may be a contact type sensor or a non-contact type sensor. However, in the exemplary embodiment, the sensor 180 is implemented as a contact type sensor which senses when an object is in contact with a contact unit, like a micro switch.

FIG. 7 is an exploded view illustrating an assembling structure of a wheel gear box assembly of a wheel assembly according to an exemplary embodiment of the present disclosure. A wheel gear box assembly 110 includes a main wheel 112, a gear box 114, and a driving motor 116.

The main wheel 112 refers to a wheel which rotates to travel the mobile robot 10. When the wheel assembly 100 is mounted on the main body of the mobile robot 10, the main wheel 112 is gripped on the traveling surface (floor) of the mobile robot 10 and is driven by the driving motor 116 to travel the mobile robot 10.

The main wheel 112 is coupled to a rotary axis of a driven gear included in the gear box 114 to rotate as one unit with the driven gear.

The main wheel 112 is fixed to the gear box 114 to rotate together with the gear box 114 by the rotation of the first hinge axis 115 equipped in the gear box 114. The grip force of the main wheel 112 with the ground may be increased by the rotation of the first hinge axis 115.

The gear box 114 may include a driving gear which is driven by the driving motor 116 and a driven gear which is driven by the driving gear.

The driving gear of the gear box 114 is coupled to a rotary axis of the driving motor 116 to be driven by the driving motor 170 and the main wheel 112 is coupled to a rotary axis of the driven gear. A transmission gear (not illustrated) which transmits a driving force of the driving gear to the driven gear may be further provided between the driving gear and the driven gear. A reduction gear having the configuration as described above transmits the driving force of the driving motor 116 to the main wheel 112.

The gear box 114 includes a first hinge axis formed to be parallel to the rotary axis of the driven gear at one side end. The first hinge axis 115 of the gear box 114 is coupled to a first hinge axis mounting unit 122 equipped in the wheel lower cover 120 to form the first hinge unit 130 which improves the grip force of the main wheel 112.

In the meantime, when the configuration of the wheel lower cover 120 is omitted, the first hinge axis 115 is not coupled to the first hinge axis mounting unit 122, but may be coupled only to the hinge coupling hole at one side end of the hinge shaft 150 to form a first hinge unit 130.

The driving motor 116 is coupled to the gear box 114 to perform an operation of generating a driving force to rotate the main wheel 112. Even though in the present exemplary embodiment, it is illustrated that the driving motor 116 which supplies a driving force for driving the main wheel 112 is accommodated in the wheel lower cover 120 and the wheel upper cover 140 to be modulated together with the wheel assembly 100 for modulation of the wheel assembly 100, the exemplary embodiment is not necessarily limited thereto. For example, the driving motor 116 is not an essential component of the wheel assembly 100 according to the present disclosure. As long as the driving gear is coupled to the driving axis of the driving motor 116, an installation position of the driving motor 116 and a coupling structure with the wheel assembly 100 may vary in various forms.

Referring to FIG. 7, the main wheel 112 is coupled to one side end of the gear box 114 and the driving motor 116 is coupled to the other side end. Here, a driving gear axis of the gear box 114 is connected to the driving motor 116 to be supplied with the driving force. Further, a driven gear axis of the gear box 114 is coupled to the center of the main wheel 112 to rotate in a predetermined direction of the main wheel 112.

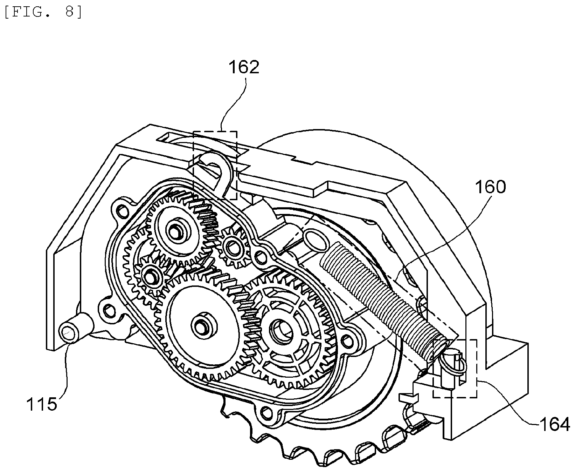

FIG. 8 is a view illustrating a connecting structure of an elastic member of a wheel assembly according to an exemplary embodiment of the present disclosure.

When the wheel gear box assembly 110 rotates by the second hinge unit 170, the wheel assembly 100 may further include an elastic member 160 for quick restoration. Here, the elastic member 160 may be a spring, but is not necessarily limited thereto so that the elastic member may be implemented with various configurations having elasticity.

Referring to FIG. 8, the elastic member 160 is connected between a first fixing unit 162 equipped in the gear box 114 and a second fixing unit 164 equipped in the wheel upper cover 140. The elastic member 160 may restore the gear box 114 of the wheel gear box assembly 110 which rotates by the hinge torque generated in the second hinge unit 170 using an elastic force. Here, even though it is illustrated that the first fixing unit 162 is equipped on an upper surface of the gear box 114, it is not necessarily limited thereto. Therefore, as long as the fixing unit 162 can be connected to the second fixing unit 162 by means of the elastic member 160, the first fixing unit may be equipped in the other position of the gear box 114.

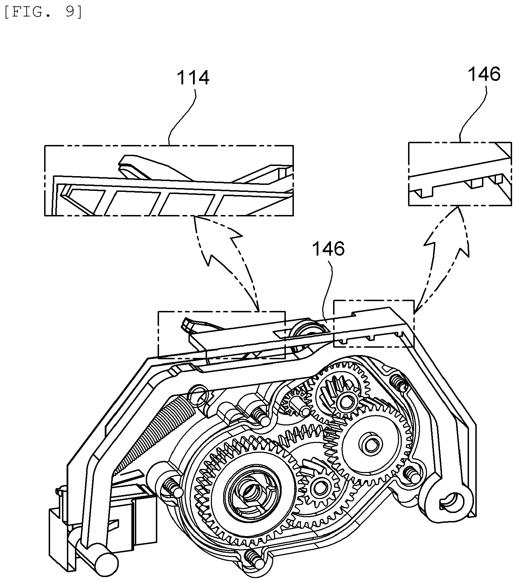

FIG. 9 is a view illustrating a structure of a wheel upper cover for adjusting a rotation angle of a plurality of hinge units according to an exemplary embodiment of the present disclosure.

Referring to FIG. 9, in an environment having a high traveling resistance, the wheel assembly 100 rotates by the first hinge unit 130 or the second hinge unit 170 to improve the grip force.

The wheel assembly 100 includes a first support unit 144 in the wheel upper cover 140 to limit a rotation angle range when the wheel assembly 100 rotates by the hinge torque generated in the first hinge unit 130. The first support unit 144 is in contact with a part of the wheel gear box assembly 110 rotated by the first hinge unit 130 to limit the rotation angle range. Here, the part of the wheel gear box assembly 110 refers to one side portion of the gear box 114.

The wheel assembly 100 includes a second support unit 146 in the wheel upper cover 140 to limit a rotation angle range when the wheel assembly 100 rotates by the hinge torque generated in the second hinge unit 170. The second support unit 146 is in contact with a part of the hinge shaft 150 rotated by the second hinge unit 170 to limit the rotation angle range. Here, the part of the hinge shaft 150 refers to a part of the main body of the hinge shaft 150 which is adjacent to the hinge coupling hole.

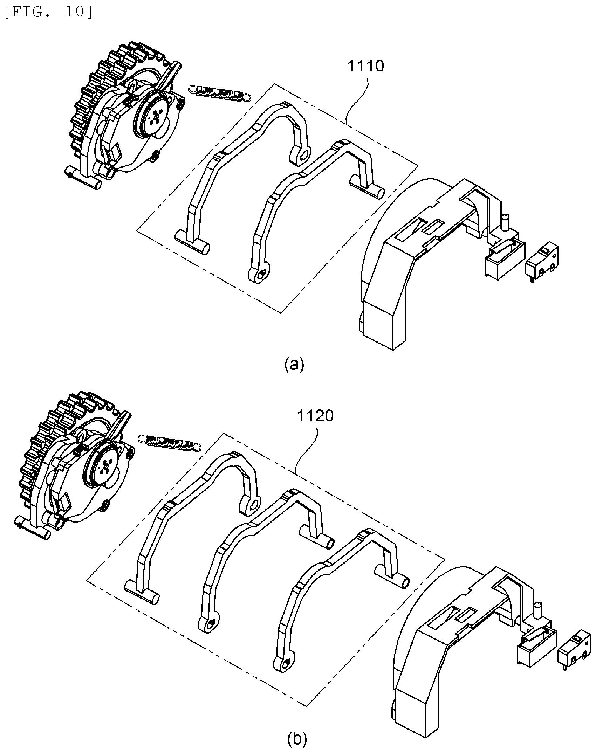

FIG. 10 is an exploded view illustrating a wheel assembly with a multiple hinge structure including a plurality of hinge shafts according to an exemplary embodiment of the present disclosure.

The wheel assembly 100 has a configuration including a plurality of hinge shafts 1110 and 1120.

FIG. 10 illustrates a plurality of hinge shafts 1110 and 1120 including an additional hinge shaft which is coupled to the hinge shaft 150 in the wheel assembly 100 illustrated in FIG. 6A(b). FIG. 10(a) illustrates a wheel assembly 100 in which two hinge shafts 1110 are added and FIG. 10 (b) illustrates a wheel assembly 100 in which three hinge shafts 1120 are added. Here, the additional hinge shaft includes a third hinge axis parallel to the first hinge axis 115 provided at one side end and a hinge coupling hole at the other side end.

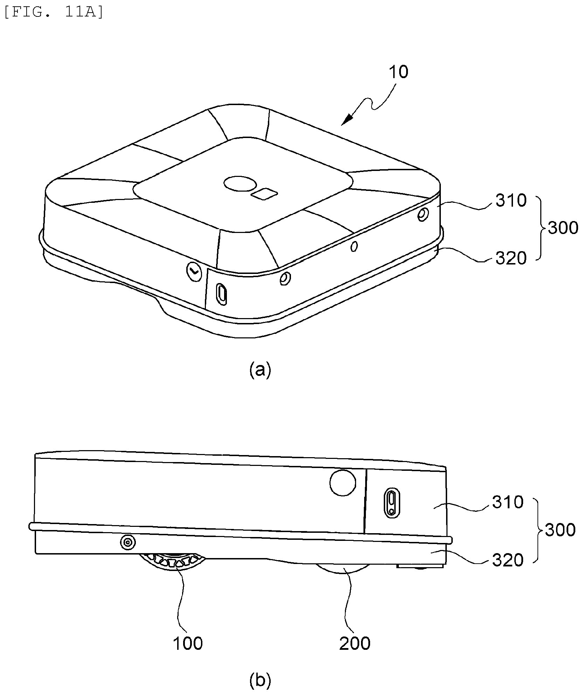

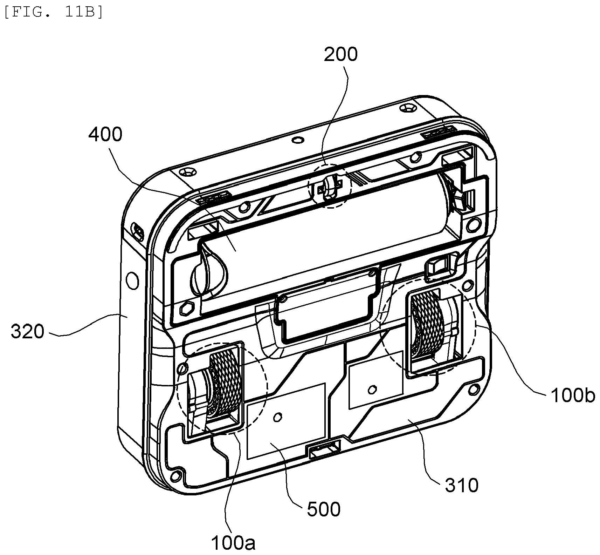

FIGS. 11A and 11B are views illustrating a mobile robot to which a wheel assembly for preventing wheel slip according to an exemplary embodiment of the present disclosure is applied. FIG. 11A(a) illustrates a perspective view of a mobile robot 10 and FIG. 11A(b) illustrates a side view of the mobile robot 10. Further, FIG. 11B illustrates a bottom perspective view of the mobile robot 10.

The mobile robot 10 according to an exemplary embodiment of the present disclosure performs the cleaning while moving a floor to be cleaned. Here, the mobile robot 10 may be a robot which performs suction type or wet type cleaning. Specifically, the mobile robot 10 performs the cleaning while moving on a ground (a cleaning floor) by rotating at least one wheel and a rotary kit equipped in the main body.

The mobile robot 10 includes a wheel assembly 100, a main body housing 300, and a rotating assembly 400.

The main body housing 300 is a housing which defines an outer circumference surface of the mobile robot 10 and is configured by an upper housing 310 and a lower housing 320. Here, the main body housing 30 may include a body which forms a skeleton such as a support in the mobile robot 10.

The main body housing 300 according to the exemplary embodiment may be a concept including both the upper housing 310 and the lower housing 320, but is not necessarily limited thereto and may be a concept that a protective cover is coupled to the lower housing 320.

The wheel assembly 100 is coupled to the main body housing 300 and generates a momentum to move the mobile robot 10. The wheel assembly 100 includes at least one wheel and a wheel driving motor which drives the wheel. The wheel assembly 100 may be implemented as a module type which is detachable from the lower housing 320 or independently separated from the lower housing.

At least one wheel which is included in the wheel assembly 100 is supplied with a driving force of the driving motor to rotate. Here, the wheel driving motor is controlled by a control circuit to be driven. At least one wheel may be equipped at left and right sides of the lower housing 320 and for the purpose of independent driving of each wheel 100a and 100b, a wheel driving motor may be individually connected to each of the wheels 100a and 100b. The mobile robot 10 may move to front, back, left, and right or rotate by at least one wheel included in the wheel assembly 100. The wheel of the wheel assembly 100 is actively driven and allows the mobile robot 10 to travel so that the wheel may be referred to as a main wheel. According to another exemplary embodiment of the present disclosure, the wheel assembly 100 may further include a main wheel encoder (not illustrated) which detects the rotation in accordance with substantial driving of the wheel. Further, the wheel assembly 100 may further include a main wheel sensor (not illustrated) which detects the rotation of the wheel or detects a current applied to the wheel driving motor.

The control circuit which controls the driving of the wheel assembly 100 may drive the wheel by the control of the wheel driving motor. The control circuit may be provided in the wheel assembly or may be implemented to allow the main processor of the mobile robot to perform the function. The control circuit may determine whether the main wheel is properly driven in accordance with the instruction from the control circuit with a signal encoded by main wheel encoder from the main wheel sensor and/or a signal acquired from the main wheel sensor as inputs. Further, when the signal detected by the main wheel sensor exceeds a reference value, that is, when the over current is applied to the driving motor, the control circuit may transmit a control signal which stops the traveling to prevent the damage of the circuit or applies a reverse bias to avoid a dangerous situation, to the wheel driving motor.

According to an exemplary embodiment of the present disclosure, an auxiliary wheel 200 maybe equipped in a position apart from the wheel assembly 100. The auxiliary wheel 200 is equipped in a position in the lower housing 320 different from at least one wheel 100a and 100b. Here, the auxiliary wheel 200 may be implemented by a passive auxiliary wheel and an active auxiliary wheel. The active auxiliary wheel is driven by a driving force, but the passive auxiliary wheel refers to a wheel which slides as the mobile robot moves by the rotation of the wheels 100a and 100b, without using a driving force. The auxiliary wheel 200 supports the mobile robot 10 together with at least one wheel 100a and 100b and assists the driving of the mobile robot 10 by at least one wheel 100a and 100b. Further, according to the exemplary embodiment, an auxiliary wheel encoder (not illustrated) which encodes the rotation of the auxiliary wheel 200 and an auxiliary wheel sensor (not illustrated) which senses the rotation of the auxiliary wheel 200 may be further included.

A rotating assembly 400 is coupled with the main body housing 300 and removes foreign materials on the floor as the mobile robot 10 moves. The rotating assembly 400 may be implemented as a module which is separable to be independently detachable from a bottom surface of the main body housing. The rotating assembly 400 may be implemented to include a brush or a rotation roller having a wet structure and may also be implemented only by an air inlet which sucks foreign materials on the floor depending on the exemplary embodiment.

Even though not illustrated in FIGS. 11A and 11B, the mobile robot may further include a main processor, a memory, and a power supply. The main processor is included in the mobile robot and controls active modules which are actively driven, to be driven, diagnoses a currently traveling situation, and generates an instruction to perform an appropriate operation in accordance with the diagnosed situation to transmit the instruction to a necessary module. Modules which are actively driven, such as a wheel assembly module or a rotating assembly may include individual sub processors. In this case, the sub processor may be implemented to perform an operation in accordance with the instruction of the main processor. When there is no sub processor, the main processor generates a driving signal to drive various modules, instead of the sub processor, to transmit the driving signal to the corresponding module. The memory may store software necessary to drive the mobile robot cleaner or store traveling information (map information or traveling distance information) generated in accordance with the traveling. The power supply supplies a power to drive the mobile robot. Further, the mobile robot may further include a communication module. In order to allow the user to remotely control the mobile robot, a communication module needs to be included in the mobile robot, which allows the remote control.

According to another exemplary embodiment of the present disclosure, the main processor or another sub processor may determine the current traveling situation using signals from sensors which sense a state of objects to be driven, such as a signal sensed by the driven modules and the wheel assembly, a signal sensed by the auxiliary wheel, or a signal sensed in association with the rotation of the rotary roller. For example, when the wheel of the wheel assembly rotates in a normal range, but the rotary roller does not properly rotate, the main processor or the sub processor (a control circuit for each module) may notice that malfunction with regard to the rotation of the rotary roller is currently generated and generate an escaping instruction to escape from this situation. This situation may be generated when the rotation member deviates from the rotary roller or the rotation member gets tangled on the traveling floor. When the rotation member deviates from the rotary roller, a height of the mobile robot and the floor (which is sensed by a PSD sensor) may be consistently lower than a predetermined reference value or a height before being deviated. In contrast, even in a situation in which the rotation member is prone to sticking such as a carpet, the rotation of the rotary roller may be disturbed. In the case of a floor member which is soft and has a predetermined height, such as a carpet, a height from the floor may be low, but the deviation for the height may be large due to the nature of the carpet. The main processor or the sub processor may determine whether the current situation is caused by the deviation of the rotation member or is generated in a traveling area such as a carpet, by the operation (calculation of a standard deviation) of the height value.

Further, when the current applied to the circuit to drive the rotary roller is lower than a reference value or when a revolution of the rotary roller is larger than a revolution of the main wheel, or when a movement distance calculated in accordance with the revolution of the rotary roller is larger than a movement distance calculated in accordance with the revolution of the main wheel, the main processor or the sub processor may determine that the rotary roller idly rotates. This may mainly happen in a situation in which almost water is ran out in the rotary roller or the main wheel is difficult to rotate.

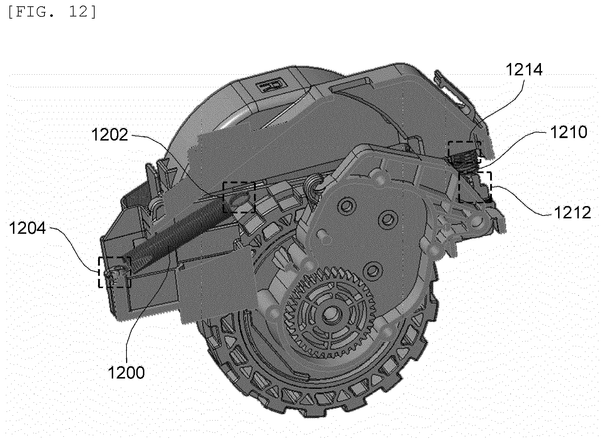

FIG. 12 is a view illustrating a connecting structure of an elastic member of a wheel assembly according to another exemplary embodiment of the present disclosure.

Referring to FIG. 12, a wheel assembly 100 according to another exemplary embodiment of the present disclosure may further include at least one elastic member 1200 and 1210.

When the wheel gear box assembly 110 rotates by the second hinge unit 170, the wheel assembly 100 may further include a first elastic member 1200 and a second elastic member 1210 for quick restoration. Here, the first elastic member 1200 and the second elastic member 1210 may be springs, but are not necessarily limited thereto so that the elastic member may be implemented with various configurations having elasticity.

Referring to FIG. 12, the first elastic member 1200 is connected between a first elastic fixing unit 1202 equipped in the gear box 114 and a second elastic fixing unit 1204 equipped in the wheel upper cover 140. The second elastic member 1210 is connected between a third elastic fixing unit 1212 equipped in the gear box 114 and a fourth elastic fixing unit 1214 equipped in the wheel upper cover 140.

The first elastic member 1200 and the second elastic member 1210 may restore the gear box 114 of the wheel gear box assembly 110 which rotates by the hinge torque generated in the second hinge unit 170 using an elastic force.

## Claims

1. A wheel assembly (100) of a mobile robot (10), comprising:
a wheel gear box assembly (110) which includes a main wheel (112) to move a mobile robot (10), a driving motor (116) and a gear which rotate the main wheel (112) and generates a hinge torque to a first hinge axis (115) equipped at one side by the rotation of the main wheel (112) to be rotatable within a predetermined range; **characterized in that**,
a hinge shaft (150) which has one side end coupled to the first hinge axis (115) of the wheel gear box assembly (110) and rotates the wheel gear box assembly (110) by means of a second hinge axis equipped at the other side end; and
a wheel upper cover (140) which is coupled to the wheel gear box assembly (110) to protect an upper portion and includes a second hinge axis mounting unit (142) formed at the other side end to be coupled to the second hinge axis (152).

2. The wheel assembly (100) of a mobile robot (10) according to claim 1, wherein the wheel gear box assembly (110) includes:
a driving motor (116) which generates a driving force to rotate the main wheel (112);
a gear box (114) which includes a driving gear which is driven by the driving motor (116) and a driven gear which is driven by the driving gear and includes a first hinge axis (115) formed to be parallel to a rotary axis of the driven gear at one side end; and
a main wheel (112) which is coupled to the rotary axis of the driven gear to rotate as one unit with the driven gear and increases a grip force by the rotation of the first hinge axis (115) .

3. The wheel assembly (100) of a mobile robot (10) according to claim 2, wherein in a first hinge unit (130) in which the first hinge axis (115) is coupled to a hinge coupling hole at one side end of the hinge shaft (150), when the main wheel (112) rotates in one direction, the hinge torque is generated in a direction opposite to one rotation direction and a normal force is generated by the hinge torque.

4. The wheel assembly (100) of a mobile robot (10) according to claim 3, wherein the first hinge unit (130) is installed in a position with a predetermined distance from a center of the rotary axis of the main wheel (112) and is installed at a height between the center of the rotary axis of the main wheel (112) and a ground.

5. The wheel assembly (100) of a mobile robot (10) according to claim 3, wherein when the main wheel (112) is rotatably driven in one rotation direction, in the first hinge unit (130), a grip force between the main wheel (112) and the ground is increased and the grip force between the main wheel (112) and the ground is increased by the normal force increased while a torque is generated to the first hinge axis (115) in a direction opposite to one rotation direction.

6. The wheel assembly (100) of a mobile robot (10) according to claim 3, further comprising:
an auxiliary wheel (200) which rotates together with the main wheel (112) and is fixed in a position with a predetermined distance from the main wheel (112) in a main body of the mobile robot (10),
wherein the first hinge unit (130) is installed between an imaginary reference line C connecting a center of the auxiliary wheel (200) and a center of the main wheel (112) and the ground.

7. The wheel assembly (100) of a mobile robot (10) according to claim 6, wherein in the first hinge unit (130), a first distance D1 between the center of the auxiliary wheel (200) and the center of the first hinge axis (115) is longer than a second distance D2 between the center of the main wheel (112) and the center of the first hinge axis (115), and the first hinge unit (130) is installed in a position in which the sum of the first distance D1 and the second distance D2 is longer than a length of the imaginary reference line C.

8. The wheel assembly (100) of a mobile robot (10) according to claim 2, wherein in a second hinge unit in which the second hinge axis is coupled to the second hinge mounting unit, when the main wheel (112) rotates in the other direction, the hinge torque is generated in a direction opposite to the other rotation direction and a normal force is generated by the hinge torque.

9. The wheel assembly (100) of a mobile robot (10) according to claim 8, further comprising:
at least one elastic member which is connected between a first fixing unit equipped in the gear box (114) and a second fixing unit equipped in the wheel upper cover (140),
wherein at least one elastic member restores the gear box (114) which rotates by the hinge torque generated in the second hinge unit.

10. The wheel assembly (100) of a mobile robot (10) according to claim 2, wherein the hinge shaft (150) includes a hinge coupling hole coupled to one side end of the first hinge axis (115) formed in the gear box (114) at one side end and a second hinge axis parallel to the first hinge axis (115) at the other side end, and the second hinge axis is installed such that the center of the second hinge axis is formed to be lower than the center of the first hinge axis (115) with respect to the ground.

11. The wheel assembly (100) of a mobile robot (10) according to claim 2, further comprising:
an additional hinge shaft coupled to the hinge shaft (150),
wherein the additional hinge shaft includes a hinge coupling hole at one side end and a third hinge axis located on a straight line with the first hinge axis (115) at the other side end.

12. A mobile robot (10) for cleaning comprising a wheel assembly (100) according to any of the claims 1 to 11.

## Patentansprüche

1. Radanordnung (100) eines mobilen Roboters (10), umfassend:
eine Radgetriebekastenanordnung (110), die ein Hauptrad (112), um einen mobilen Roboter (10) zu bewegen, einen Antriebsmotor (116) und ein Getriebe, die das Hauptrad (112) rotieren, einschließt und ein Scharnierdrehmoment auf eine erste Scharnierachse (115), die an einer Seite ausgerüstet ist, durch die Rotation des Hauptrads (112) zu erzeugen, um innerhalb eines zuvor bestimmten Bereichs rotierbar zu sein; **gekennzeichnet durch**
eine Scharnierwelle (150), die ein Seitenende, das mit der ersten Scharnierachse (115) der Radgetriebekastenanordnung (110) gekoppelt ist, aufweist und die Radgetriebekastenanordnung (110) mittels einer zweiten Scharnierachse, die an dem anderen Seitenende ausgerüstet ist, rotiert; und
eine Radoberabdeckung (140), die mit der Radgetriebekastenanordnung (110) gekoppelt ist, um einen Oberabschnitt zu schützen und eine zweite Scharnierhalterungseinheit (142), die an dem anderen Seitenende ausgebildet ist, um mit der zweiten Scharnierachse (152) gekoppelt zu werden, einschließt.

2. Radanordnung (100) eines mobilen Roboters (10) nach Anspruch 1, wobei die Radgetriebekastenanordnung (110) einschließt:
einen Antriebsmotor (116), der eine Antriebskraft erzeugt, um das Hauptrad (112) zu rotieren;
ein Getriebekasten (114), der ein Antriebsgetriebe, das durch den Antriebsmotor (116) angetrieben wird, und ein angetriebenes Getriebe, das durch das Antriebsgetriebe angetrieben wird, einschließt und eine erste Scharnierachse (115), die ausgebildet ist, um parallel zu einer Rotationsachse des angetriebenen Getriebes zu sein, an einem Seitenende einschließt; und
ein Hauptrad (112), das mit der Rotationsachse des angetriebenen Getriebes gekoppelt ist, um als eine Einheit mit dem angetriebenen Getriebe zu rotieren und eine Greifkraft durch die Rotation der ersten Scharnierachse (115) steigert.

3. Radanordnung (100) eines mobilen Roboters (10) nach Anspruch 2, wobei in einer ersten Scharniereinheit (130), in der die erste Scharnierachse (115) mit einer Scharnierkopplungsbohrung an einem Seitenende der Scharnierwelle (150) gekoppelt ist, wenn das Hauptrad (112) in einer Richtung rotiert, das Scharnierdrehmoment in einer Richtung entgegengesetzt zu einer Rotationsrichtung erzeugt wird und eine Normalkraft durch das Scharnierdrehmoment erzeugt wird.

4. Radanordnung (100) eines mobilen Roboters (10) nach Anspruch 3, wobei die erste Scharniereinheit (130) in einer Position mit einem zuvor bestimmten Abstand von einer Mitte der Rotationsachse des Hauptrads (112) installiert ist und in einer Höhe zwischen der Mitte der Rotationsachse des Hauptrads (112) und einem Boden installiert ist.

5. Radanordnung (100) eines mobilen Roboters (10) nach Anspruch 3, wobei, wenn das Hauptrad (112) in einer Rotationsrichtung rotierbar angetrieben wird, in der ersten Scharniereinheit (130), eine Greifkraft zwischen dem Hauptrad (112) und dem Boden gesteigert wird und die Greifkraft zwischen dem Hauptrad (112) und dem Boden durch die Normalkraft gesteigert wird, die, während ein Drehmoment auf die erste Scharnierachse (115) in einer Richtung entgegengesetzt zu einer Rotationsrichtung erzeugt wird, gesteigert wird.

6. Radanordnung (100) eines mobilen Roboters (10) nach Anspruch 3, ferner umfassend:
ein Hilfsrad (200), das zusammen mit dem Hauptrad (112) rotiert und in einer Position mit einem zuvor bestimmten Abstand von dem Hauptrad (112) in einem Hauptkörper des mobilen Roboters (10) befestigt ist,
wobei die erste Scharniereinheit (130) zwischen einer gedachten Referenzlinie C, die eine Mitte des Hilfsrads (200) und eine Mitte des Hauptrads (112) verbindet, und des Bodens installiert ist.

7. Radanordnung (100) eines mobilen Roboters (10) nach Anspruch 6, wobei in der ersten Scharniereinheit (130) ein erster Abstand D1 zwischen der Mitte des Hilfsrads (200) und der Mitte der ersten Scharnierachse (115) länger als ein zweiter Abstand D2 zwischen der Mitte des Hauptrads (112) und der Mitte der ersten Scharnierachse (115) ist und die erste Scharniereinheit (130) in einer Position, in der die Summe des ersten Abstands D1 und des zweiten Abstands D2 länger als eine Länge der gedachten Referenzlinie C ist, installiert ist.

8. Radanordnung (100) eines mobilen Roboters (10) nach Anspruch 2, wobei in einer zweiten Scharniereinheit, in der die zweite Scharnierachse mit der zweiten Scharnierhalterungseinheit gekoppelt ist, wenn das Hauptrad (112) in der anderen Richtung rotiert, das Scharnierdrehmoment in einer Richtung entgegengesetzt zu der anderen Rotationsrichtung erzeugt wird und eine Normalkraft durch das Scharnierdrehmoment erzeugt wird.

9. Radanordnung (100) eines mobilen Roboters (10) nach Anspruch 8, ferner umfassend:
mindestens ein elastisches Element, das zwischen einer ersten Befestigungseinheit, die in dem Getriebekasten (114) ausgerüstet ist, und einer zweiten Befestigungseinheit, die in der Radoberabdeckung (140) ausgerüstet ist, verbunden ist,
wobei mindestens ein elastisches Element den Getriebekasten (114) zurücksetzt, der durch das Scharnierdrehmoment, das in der zweiten Scharniereinheit erzeugt wird, rotiert.

10. Radanordnung (100) eines mobilen Roboters (10) nach Anspruch 2, wobei die Scharnierwelle (150) eine Scharnierkopplungsbohrung, die mit einem Seitenende der ersten Scharnierachse (115), die in dem Getriebekasten (114) ausgebildet ist, gekoppelt ist, an einem Seitenende und eine zweite Scharnierachse parallel zu der ersten Scharnierachse (115) an dem anderen Seitenende einschließt und die zweite Scharnierachse derart installiert ist, dass die Mitte der zweiten Scharnierachse ausgebildet ist, um niedriger als die Mitte der ersten Scharnierachse (115) hinsichtlich des Bodens zu sein.

11. Radanordnung (100) eines mobilen Roboters (10) nach Anspruch 2, ferner umfassend:
eine zusätzliche Scharnierwelle, die mit der Scharnierwelle (150) gekoppelt ist,
wobei die zusätzliche Scharnierwelle eine Scharnierkopplungsbohrung an einem Seitenende und eine dritte Scharnierachse, die sich auf einer geraden Linie mit der ersten Scharnierachse (115) an dem anderen Seitenende befindet, einschließt.

12. Mobiler Roboter (10) zum Reinigen, umfassend eine Radanordnung (100) nach einem der Ansprüche 1 bis 11.

## Revendications

1. Ensemble roue (100) d'un robot mobile (10), comprenant :
un ensemble boîte d'engrenages de roue (110) qui comporte une roue principale (112) pour déplacer un robot mobile (10), un moteur d'entraînement (116) et un engrenage qui tourne la roue principale (112) et génère un couple de charnière sur un premier axe de charnière (115) équipé au niveau d'un côté par la rotation de la roue principale (112) pour pouvoir tourner dans les limites d'une plage prédéterminée ; **caractérisé en ce que,**
un arbre de charnière (150) qui a une extrémité latérale accouplée au premier axe de charnière (115) de l'ensemble boîte d'engrenages de roue (110) et fait tourner l'ensemble boîte d'engrenages de roue (110) au moyen d'un deuxième axe de charnière équipé au niveau de l'autre extrémité latérale ; et
un enjoliveur supérieur de roue (140) qui est accouplé à l'ensemble boîte d'engrenages de roue (110) pour protéger une partie supérieure et comporte une seconde unité de montage d'axe de charnière (142) formée au niveau de l'autre extrémité latérale pour être accouplée au deuxième axe de charnière (152).

2. Ensemble roue (100) d'un robot mobile (10) selon la revendication 1, dans lequel l'ensemble boîte d'engrenages de roue (110) comporte :
un moteur d'entraînement (116) qui génère une force d'entraînement pour faire tourner la roue principale (112) ;
une boîte d'engrenages (114) qui comporte un engrenage d'entraînement qui est entraîné par le moteur d'entraînement (116) et un engrenage entraîné qui est entraîné par l'engrenage d'entraînement et comporte un premier axe de charnière (115) formé pour être parallèle à un axe de rotation de l'engrenage entraîné au niveau d'une extrémité latérale ; et
une roue principale (112) qui est accouplée à l'axe de rotation de l'engrenage entraîné pour tourner en tant qu'unité avec l'engrenage entraîné et augmente une force d'adhérence par la rotation du premier axe de charnière (115).

3. Ensemble roue (100) d'un robot mobile (10) selon la revendication 2, dans lequel dans une première unité de charnière (130) dans laquelle le premier axe de charnière (115) est accouplé à un trou d'accouplement de charnière au niveau d'une extrémité latérale de l'arbre de charnière (150), lorsque la roue principale (112) tourne dans une direction, le couple de charnière est généré dans une direction opposée à une direction de rotation et une force normale est générée par le couple de charnière.

4. Ensemble roue (100) d'un robot mobile (10) selon la revendication 3, dans lequel la première unité de charnière (130) est installée dans une position avec une distance prédéterminée d'un centre de l'axe de rotation de la roue principale (112) et est installée au niveau d'une hauteur entre le centre de l'axe de rotation de la roue principale (112) et un sol.

5. Ensemble roue (100) d'un robot mobile (10) selon la revendication 3, dans lequel lorsque la roue principale (112) est entraînée en rotation dans une direction de rotation, dans la première unité de charnière (130), une force d'adhérence entre la roue principale (112) et le sol est augmentée et la force d'adhérence entre la roue principale (112) et le sol est augmentée par la force normale augmentée tandis qu'un couple est généré au premier axe de charnière (115) dans une direction opposée à une direction de rotation.

6. Ensemble roue (100) d'un robot mobile (10) selon la revendication 3, comprenant en outre :
une roue auxiliaire (200) qui tourne conjointement avec la roue principale (112) et est fixée dans une position avec une distance prédéterminée de la roue principale (112) dans un corps principal du robot mobile (10),
dans lequel la première unité de charnière (130) est installée entre une ligne de référence imaginaire C reliant un centre de la roue auxiliaire (200) et un centre de la roue principale (112) et du sol.

7. Ensemble roue (100) d'un robot mobile (10) selon la revendication 6, dans lequel dans la première unité de charnière (130), une première distance D1 entre le centre de la roue auxiliaire (200) et le centre du premier axe de charnière (115) est plus longue qu'une seconde distance D2 entre le centre de la roue principale (112) et le centre du premier axe de charnière (115), et la première unité de charnière (130) est installée dans une position dans laquelle la somme de la première distance D1 et de la seconde distance D2 est plus longue qu'une longueur de la ligne de référence imaginaire C.

8. Ensemble roue (100) d'un robot mobile (10) selon la revendication 2, dans lequel dans une seconde unité de charnière dans laquelle le deuxième axe de charnière est accouplé à la seconde unité de montage de charnière, lorsque la roue principale (112) tourne dans l'autre direction, le couple de charnière est généré dans une direction opposée à l'autre direction de rotation et une force normale est générée par le couple de charnière.

9. Ensemble roue (100) d'un robot mobile (10) selon la revendication 8, comprenant en outre :
au moins un élément élastique qui est relié entre une première unité de fixation équipée dans la boîte d'engrenages (114) et une seconde unité de fixation équipée dans l'enjoliveur supérieur de la roue (140),
dans lequel au moins un élément élastique restaure la boîte d'engrenages (114) qui tourne par le couple de charnière généré dans la seconde unité de charnière.

10. Ensemble roue (100) d'un robot mobile (10) selon la revendication 2, dans lequel l'arbre de charnière (150) comporte un trou d'accouplement de charnière accouplé à une extrémité latérale du premier axe de charnière (115) formé dans la boîte d'engrenages (114) au niveau d'une extrémité latérale et un deuxième axe de charnière parallèle au premier axe de charnière (115) au niveau de l'autre extrémité latérale, et le deuxième axe de charnière est installé de telle sorte que le centre du deuxième axe de charnière est formé pour être inférieur au centre du premier axe de charnière (115) par rapport au sol.

11. Ensemble roue (100) d'un robot mobile (10) selon la revendication 2, comprenant en outre :
un arbre de charnière supplémentaire accouplé à l'arbre de charnière (150),
dans lequel l'arbre de charnière supplémentaire comporte un trou d'accouplement de charnière au niveau d'une extrémité latérale et un troisième axe de charnière situé sur une ligne droite avec le premier axe de charnière (115) au niveau de l'autre extrémité latérale.

12. Robot mobile (10) destiné au nettoyage comprenant un ensemble roue (100) selon l'une quelconque des revendications 1 à 11.
